# EUROPEAN PATENT APPLICATION

(11) **EP 1 195 195 A1**
(43) Date of publication of application: **10.04.2002**
(21) Application number: 00917302.2
(22) Date of filing: 13.04.2000
(51) Int. Cl.: B01J 20/18, B01D 53/06

(54) **ADSORBENT FOR GASEOUS CHEMICAL SUBSTANCE AND APPARATUS FOR ADSORBING AND REMOVING USING THE SAME**

(30) Priority: 15.04.1999 JP 10847999
(71) Applicant: Daikin Industries, Ltd., Osaka-shi, Osaka 530-8323 (JP)
(72) Inventor: TAMURA, Yoshio, Settsu-shi, Osaka 566-8585 (JP); SHINODA, Yasuyoshi, Settsu-shi, Osaka 566-8585 (JP)
(74) Representative: Beetz & Partner Patentanwälte
(86) International application number: JP0002398
(87) International publication number: WO0062921

(57) **Abstract**

A gaseous chemical substance adsorbent formed of a honeycomb-like laminate carrying a zeolite having an SiO₂/Al₂O₃ mole-ratio of greater than 70 and a zeolite having a mole-ratio of from 5 to 70. A rotor (2) formed from the gaseous chemical substance adsorbent in an approximately cylindrical form so that a gas passes through in an axial direction, the rotor being connected to gas-guiding portions (8), (12), and (15) formed by circumferentially partitioning the rotor (2) into an adsorbing portion, a regenerating portion, and a cooling portion in this order at both axial sides thereof, wherein a gas to be treated containing gaseous chemical substances is fed to the adsorbing portion (16); a regeneration gas is fed to the regenerating portion (17) after being heated by heating means (11); and a cooling gas is fed to the cooling portion (18). The rotor 2 is rotated from the adsorbing portion (16) to the regenerating portion (17), and subsequently to the cooling portion (18), whereby the gaseous chemical substances adsorbed in the adsorbing portion (16) are desorbed by heating in the regenerating portion (17) and are cooled to a temperature suitable for adsorption in the cooling portion (18).

## Description

### Technical Field

The present invention relates to an adsorbent for adsorbing gaseous chemical substances, particularly, ammonia and organic gaseous chemical substances, contained in a gas, in an adsorption treatment process and an adsorption and removal apparatus using the same.

### Background Art

There have conventionally been in use a gaseous chemical substance adsorbent composed of a honeycomb-like laminate having an organic-solvent adsorbent carried thereon, wherein organic gaseous chemical substances are adsorbed by allowing a gas containing the organic gaseous chemical substances to pass through the laminate; and an adsorption and removal apparatus in which the cylindrical-shaped adsorbent is rotated and has one portion used for adsorption and another portion used for desorption with use of a high temperature gas (Japanese Unexamined Patent Publication JP-A 7-313825 (1995)). Here, a hydrophobic zeolite having a high capability of adsorbing an organic solvent is used as the adsorbent.

However, zeolites usually do not adsorb an organic solvent well but selectively adsorb moisture contained in the air. In general, about 10 grams of moisture is present per kilogram of air. This is ten thousand times larger in quantity than an organic solvent contained as a gaseous chemical substance. Zeolite has a problem that its adsorption capability becomes saturated due to adsorption of moisture contained in the air before adsorbing the gaseous chemical substance, which hinders subsequent adsorption of the gaseous chemical substance. On the other hand, a hydrophobic zeolite selectively adsorbs an organic gaseous chemical substance, but it adsorbs poorly inorganic gaseous chemical substances such as ammonia and sulfur compounds.

An object of the invention is to provide a gaseous chemical substance adsorbent and an adsorption and removal apparatus capable of adsorbing both organic and inorganic gaseous chemical substances with high efficiency.

### Disclosure of Invention

The invention provides a gaseous chemical substance adsorbent comprising:
a zeolite having an SiO₂/Al₂O₃ mole-ratio of 70 or more; and
a zeolite having an SiO₂/Al₂O₃ mole-ratio of from 5 to 70.

According to the invention, depending on gaseous chemical substances, two or more zeolites are used, namely, one or more zeolites having an SiO₂/Al₂O₃ mole-ratio of 70 or more and one or more zeolites having an SiO₂/Al₂O₃ mole-ratio of from 5 to 70. This makes it possible to adsorb and remove both organic and inorganic gaseous chemical substances with efficiency.

Zeolites are represented by the following molecular formula: aM₂Oₓ · Al₂O₃ · mSiO₂ · bH₂O, wherein M represents an alkaline or alkaline-earthmetal; x represents a valence thereof; and m represents a mole-ratio SiO₂/Al₂O₃ between silica (SiO₂) and alumina (Al₂O₃). Note that a zeolite having a mole-ratio m of less than 5 is classed as a hydrophilic zeolite. In this invention, a zeolite having a mole-ratio m within a range of 5 to 70 (hereafter referred to as a weak hydrophobic zeolite) and a zeolite having a mole-ratio m of greater than 70 (hereafter referred to as a strong hydrophobic zeolite) are filled in a fluidized-bed adsorption tower, or are carried on a honeycomb-like laminate in an amount of 30 to 90% by weight. A mixture ratio between the weak hydrophobic zeolite and the strong hydrophobic zeolite should preferably be changed according to gaseous chemical substances. Preferably a weak hydrophobic zeolite of 10 to 90% by weight and a strong hydrophobic zeolite of 90 to 10% by weight are mixed.

The invention further provides an adsorption and removal apparatus for successively and intermittently adsorbing and removing gaseous chemical substances, comprising:
a rotor formed of the above-mentioned gaseous chemical substance adsorbent, the rotor being substantially cylindrically shaped so that a gas passes through the rotor in an axial direction thereof;
driving means for rotating the rotor about an axial line thereof;
a gas guiding portion formed by circumferentially partitioning the rotor at both axial ends into an adsorbing portion, a regenerating portion, and a cooling portion in this order along an rotation direction, the gas guiding portion consisting of: a gas-to-be-treated guiding portion for feeding a gas containing gaseous chemical substances to one axial side of the adsorbing portion of the rotor and discharging the gas from the other axial side thereof to outside; a regeneration-gas guiding portion for feeding a gas for use in regeneration to the other axial side of the regenerating portion of the rotor and discharging the gas into the one axial side thereof; and a cooling-gas guiding portion for feeding a cooling gas to the other axial side of the cooling portion of the rotor and discharging the gas from the one axial side thereof to outside; and
heating means for heating a gas which is fed to the regenerating portion.

According to the invention, the gaseous chemical substance adsorbent is approximately cylindrically shaped, wherein the adsorbing portion, the regenerating portion, and the cooling portion are rotated about the axis of the adsorbent in this order by the driving means. In the adsorbing portion, a gas containing gaseous chemical substances flows from one axial side to the other axial side of the rotor so that the gaseous chemical substances are adsorbed and removed. In the regenerating portion, the gaseous chemical substances adsorbed by the adsorbing portion are desorbed by a gas having been heated by the heating means, whereby the rotor is regenerated. In the cooling portion, the rotor having been heated by a gas for use in regeneration in the regenerating portion is cooled to a suitable temperature so that gaseous chemical substances are adsorbed in the adsorbing portion. In this way, the gas containing gaseous chemical substances is successively processed.

The invention is characterized in that a total amount of gaseous chemical substances remaining in the gas having undergone the gaseous chemical substances removal treatment is equal to or less than 5ppb.

According to the invention, the gas treated in the adsorption and removal apparatus is substantially free from chemicals. To achieve this, as a ventilating condition for the gas to be treated, air velocity in front of the rotor needs to be set at 2.5m/sec or below, and the axial length L needs to be set at 400mm.

### Brief Description of Drawings

Other and further objects, features, and advantages of the invention will be more explicit from the following detailed description taken with reference to the drawings wherein:
Fig. 1 is a schematic diagram of an adsorption and removal apparatus (1) of an embodiment of the invention;
Fig. 2 is a perspective view of a rotor (2);
Fig. 3 is an enlarged plan view of a honeycomb laminate (15); and
Fig. 4 is a graph showing the relationship between SiO₂/Al₂O₃ and the amount of water and benzene adsorbed.

### Best Mode for Carrying out the Invention

Now referring to the drawings, preferred embodiments of the invention are described below.

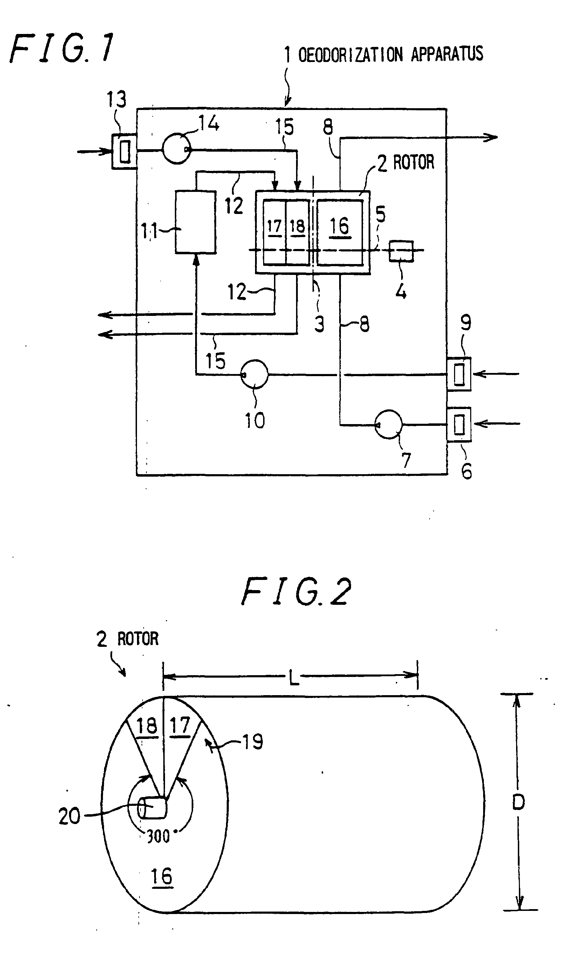

Fig. 1 is a schematic diagram of an adsorption and removal apparatus (1) of an embodiment of the invention. A rotor (2) is shaped like a cylinder 300mm in diameter D and 400mm in length L, and is rotated about an axis (3) via a belt (5) at 2/hr by a driving motor (4). Fig. 2 is a perspective view of the rotor (2). The rotor (2) comprises an adsorbing portion (16) circumferentially extending over 300°, a regenerating portion (17), located downstream of the adsorbing portion (16) in a rotation direction (19), circumferentially extending over 30°, a cooling portion (18), located downstream of the regenerating portion (17) in a rotation direction, circumferentially extending over 30°, and a rotation shaft (20) provided at a center of the rotor (2).

A gas to be treated (hereafter, referred to as a treated gas) is sucked, through a filter (6), into a treated gas fan (7), is fed to the adsorbing portion (16) of the rotor (2) by a treated gas guiding portion (8), and, after a gaseous chemical substance contained therein is adsorbed by the rotor (2), passes through a treated gas guiding portion (8) so as to be discharged to outside. On the other hand, a regeneration gas is sucked, through a filter (9), into a regeneration gas fan (10), is heated to 180°C by a heater (11), is fed to the regenerating portion (17) of the rotor (2) by a regeneration gas guiding portion (12), and, after desorbing the gaseous chemical substance adsorbed by the rotor (2), passes through the regeneration gas guiding portion (12) so as to be discharged from the apparatus (1). Since the regenerating portion (17) of the rotor (2) is heated to approximately 180°C due to a regeneration gas heated to 180°C; in the cooling portion (18), it is cooled to an approximately ordinary temperature by a cooling gas. The cooling gas is sucked, through a filter (13), into a cooling fan (14), is fed to the cooling portion (18) by a cooling gas guiding portion (15), and is, after cooling the rotor (2), discharged from the cooling gas guiding portion (15). A treated gas fed to the adsorbing portion (16), a regeneration gas fed to the regenerating portion (17), and a cooling gas fed to cooling portion (18) flow within the rotor (2) in reverse directions. This makes it possible to achieve adsorption, desorption, and cooling with efficiency.

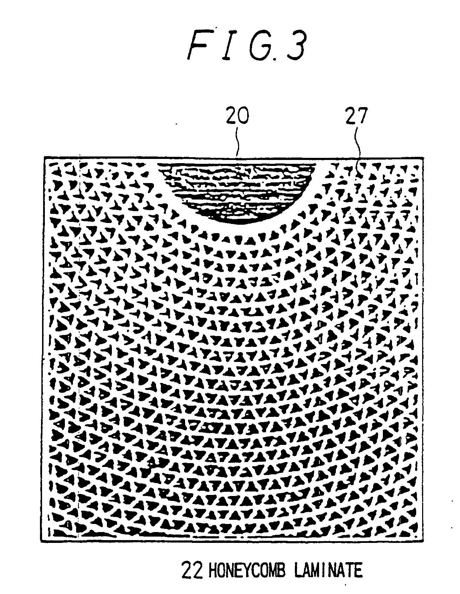

Fig. 3 is an enlarged partial plan view of a honeycomb-like laminate (22) employed in the gaseous chemical substance adsorbent embodying the invention. The laminate (22) is, when formed into a cylindrical rotor (2), so designed that its honeycomb-like pores (27) are formed so as to open in the axial direction of the rotor.

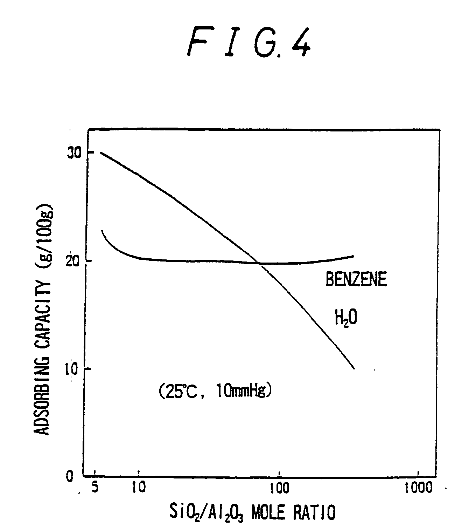

Fig. 4 is a graph showing a relationship between a mole-ratio between SiO₂ and Al₂O₃ constituting zeolite (SiO₂/Al₂O₃) and amounts of water and benzene adsorbed. A point of intersection of two lines representing the amounts of water and benzene adsorbed, respectively, coincides with an SiO₂/Al₂O₃ of about 70. Therefore, in the invention, a 10 to 90% by weight weak hydrophobic zeolite having an SiO₂/Al₂O₃ equal to or less than a value corresponding to the intersection (SiO₂/Al₂O₃ = 70) and a 90 to 10% by weight strong hydrophobic zeolite having an SiO₂/Al₂O₃ greater than the intersection value are carried on the honeycomb-like laminate (22). In the following Example, adsorption tests were conducted with use of the rotor (2) formed of the honeycomb-like laminate (22) carrying a weak hydrophobic zeolite having an SiO₂/Al₂O₃ mole-ratio of 60 and a strong hydrophobic zeolite having an SiO₂/Al₂O₃ mole-ratio of 200 that are equal in quantity.

### (Example)

A treated gas was prepared by adding to the air 62 to 75 ppb ammonia (as an inorganic gaseous chemical substance) and 740 to 800 ppb N-methylpyrolidone (NMP) (as an organic gaseous chemical substance). The treated gas thus obtained was fed to the adsorption and removal apparatus (1) attached to the rotor (2) at a flow rate of about 3m³/min. Moreover, regeneration was achieved with air heated to 175°C at a flow rate of about 0.6m³/min.

Since it took about 1 hour for the treated gas and the regeneration gas to flow into the apparatus (1) with stability, the treated gas and other were sampled and analyzed 1 hour after setting of the apparatus was completed. As for ammonia, the individual gases had been sucked for three hours at a rate of 2L/min by a diaphragm mini-pump via an impinger (two-stage combined structure) filled with an adsorbing solution, and then ammonia contained in the adsorbing solution was analyzed by ion-chromatograph method to calculate the ammonia density of each gas. As for NMP, the gases were sucked by a diaphragm mini-pump via an adsorption tower filled with an adsorbent, and then an amount of gas sucked was measured by a dry gas meter. In this way, sampling was achieved. The NMP adsorbed by the adsorbent was expelled, while being heated, therefromby an inert gas. Then, an amount of NMP contained in the inert gas was measured by TCT-GC/MS method. The results of the measurements are shown in Table 1.

**Table 1**

| | Example | | Comparative Example 1 | | Comparative Example 2 | |
|---|---|---|---|---|---|---|
| | NH₃ (ppb) | NMP (ppb) | NH₃ (ppb) | NMP (ppb) | NH₃ (ppb) | NMP (ppb) |
| Treated gas (enter) | 62 | 740 | 67 | 760 | 75 | 800 |
| Treated gas (exit) | 1.4 | 0.1 or below | 23 | 0.1 or below | 1.0 | 10 |
| Adsorption/ Removal efficiency | 97.7% | 100% | 65.7% | 100% | 98.7% | 98.8% |
| Gas for regeneration | 390 | 4440 | 270 | 4790 | 460 | 5130 |
| Concentration magnification | 6.4 | 6.0 | 6.1 | 6.3 | 6.3 | 6.5 |

### (Comparative Example 1)

The adsorption and removal apparatus was operated under the same conditions as those in Example, except that a strong hydrophobic zeolite having an SiO₂/Al₂O₃ mole-ratio of 200 is used as zeolite to be carried on the honeycomb-like laminate (22). The tests results are shown in Table 1.

### (Comparative Example 2)

The adsorption and removal apparatus was operated under the same conditions as those in Example, except that a weak hydrophobic zeolite having an SiO₂/Al₂O₃ mole-ratio of 60 is used as zeolite to be carried on the honeycomb laminate (22). The tests results are shown in Table 1.

As is understood from the test results on Example and Comparative Examples, the adsorption and removal apparatus embodying the invention that employs zeolite is capable of adsorbing and removing both inorganic gaseous chemical substances, such as ammonia, and organic gaseous chemical substances, such as NMP, with satisfactorily high adsorption and removal efficiency.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

### Industrial applicability

According to claims 1 to 4, since a weak hydrophobic zeolite and a strong hydrophobic zeolite are used, this allows efficient adsorption of both inorganic and organic gaseous chemical substances. The gaseous chemical substance adsorbent embodying the invention is filled in a fluidized-bed adsorption tower or is carried on a honeycomb-like laminate before use. A mixture ratio of a weak hydrophobic zeolite is preferably set to a range of from 10 to 90% by weight.

According to claim 5, since a gaseous chemical substance is efficiently adsorbed in an adsorbing portion (16), and a regenerating portion (17) and a cooling portion (18) perform desorption and cooling with efficiency, this allows a gaseous chemical substance to be successively treated with efficiency.

According to claim 6, a gaseous chemical substance can be adsorbed to a degree that a gas is substantially free from chemicals.

## Claims

1. A gaseous chemical substance adsorbent comprising:
a zeolite having an SiO₂/Al₂O₃ mole-ratio of 70 or more; and
a zeolite having an SiO₂/Al₂O₃ mole-ratio of from 5 to 70.

2. The gaseous chemical substance adsorbent of claim 1, comprising:
the zeolite having an SiO₂/Al₂O₃ mole-ratio of 70 or more of 10 to 90% by weight, and
the zeolite having an SiO₂/Al₂O₃ mole-ratio of from 5 to 70 of 90 to 10% by weight.

3. A gaseous chemical substance adsorbent comprising:
a honeycomb-like laminate having two or more zeolites carried thereon,
wherein the two or more zeolites include a zeolite having an SiO₂/Al₂O₃ mole-ratio of 70 or more, and a zeolite having an SiO₂/Al₂O₃ mole-ratio of from 5 to 70.

4. The gaseous chemical substance adsorbent of claim 1, wherein the two or more zeolites include the zeolite having an SiO₂/Al₂O₃ mole-ratio of 70 or more of 10 to 90% by weight and the zeolite having an SiO₂/Al₂O₃ mole-ratio of from 5 to 70 of 90 to 10% by weight.

5. An adsorption and removal apparatus for successively and intermittently adsorbing and removing gaseous chemical substances, comprising:
a rotor formed of the above-mentioned gaseous chemical substance adsorbent, the rotor being substantially cylindrically shaped so that a gas passes through the rotor in an axial direction thereof;
driving means for rotating the rotor about an axial line thereof;
a gas guiding portion formed by circumferentially partitioning the rotor at both axial ends into an adsorbing portion, a regenerating portion, and a cooling portion in this order along an rotation direction, the gas guiding portion consisting of: a gas-to-be-treated guiding portion for feeding a gas containing gaseous chemical substances to one axial side of the adsorbing portion of the rotor and discharging the gas from the other axial side thereof to outside; a regeneration-gas guiding portion for feeding a gas for use in regeneration to the other axial side of the regenerating portion of the rotor and discharging the gas into the one axial side thereof; and a cooling-gas guiding portion for feeding a cooling gas to the other axial side of the cooling portion of the rotor and discharging the gas from the one axial side thereof to outside; and
heating means for heating a gas which is fed to the regenerating portion.

6. The adsorption and removal apparatus of claim 5, wherein a total amount of gaseous chemical substances remaining in the gas having undergone the gaseous chemical substances removal treatment is equal to or less than 5ppb.
